# EUROPEAN PATENT APPLICATION

(11) **EP 2 924 528 A1**
(43) Date of publication of application: **30.09.2015**
(21) Application number: 14161922.1
(22) Date of filing: 27.03.2014
(51) Int. Cl.: G05B 23/02, G06F 9/445, G06F 3/0484

(54) **Manufacturing execution system configuration method**

(71) Applicant: Siemens Aktiengesellschaft, 80333 München (DE)
(72) Inventor: Sassetti, Andrea, 19020 Vezzano Ligure (SP) (IT)
(74) Representative: Maier, Daniel Oliver

(57) **Abstract**

A method of configuring a MES system, comprising the steps of:
- providing users with a graphical user interface (100, 200, 300) making available a list (100) of configuration actions (101...108) concerning components and/or functionalities of the system, as well as a configuration workflow (200);
- selecting one or more configuration actions (108) from the list (100) and inserting (110) the or each selected action into the workflow (200) in a required position (204) through a drag-and-drop operation; and
- executing the configuration workflow (200).

## Description

The invention relates to a method of and equipment for configuring a computer managed manufacturing execution system (MES).

As defined by the Manufacturing Enterprise Solutions Association (MESA International), a MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

The functions that MES systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES products under its SIMATIC® product family.

In MES systems, different functions or manufacturing issues like those mentioned above are generally devoted to different components, which are often handled by different groups of people and on different machines. In such a situation, set-up and configuration problems arise. On the one hand each individual machine has different set-up requirements according to its specific configuration. This makes it impossible to easily identify the environment in which the machine is operating and the context of operation. On the other hand, each component may have a different configuration language, due to the customizability of set-up scripts, and this can involve incompatibility, overlapping and difficulty in expanding tasks with additional steps.

Thus, at present, when configuring a system of that kind, a separate script or configuration workflow is created for each individual machine, according to its configuration, and also the components are configured one at a time through a respective set-up script. Creating a separate script or configuration workflow for each target machine is a time-consuming process, due to the obligatory analysis phase, and more error prone, as required configurations could be omitted by mistake. Also individually configuring the different components takes a considerable amount of time. Moreover, the set-up scripts used to configure components require:
- in-depth knowledge of script languages and of the component to be configured (knowledge the user may lack);
- further verification during execution phase, as scripts are, by definition, prone to error.

It is an object of the invention to provide a method of and equipment for configuring a MES system, which overcome the above-mentioned drawbacks.

This object is achieved through a method and equipment comprising the following steps:
- providing users of the system with a graphical user interface providing a list of configuration actions to be performed on components and/or functionalities of the system as well as a configuration workflow;
- selecting one or more configuration actions from the list and inserting the or each selected action into the workflow in a required position;
- executing the configuration workflow.

In embodiments of the invention where the workflow runs on several machines, each providing a respective environment, the configuration actions include a checking action to be inserted into the workflow to identify the environment in which the workflow is running.

Insertion of the configuration and checking actions is performed through a drag-and-drop operation.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the above mentioned method.

Thanks to workflow technology, a simple and natural way of configuring the components of MES systems is provided, which allows users to simultaneously configure different components while taking into account the specific configuration of different machines, and which does not require the users to have an in-depth knowledge of scripting languages and of the component.

The invention will now be described in preferred but not exclusive embodiments with reference to the accompanying drawings, wherein:
Figure 1 is a block diagram of a system in which the invention can be applied;
Figures 2, 3 are graphical representations of two phases of the method according to the invention.

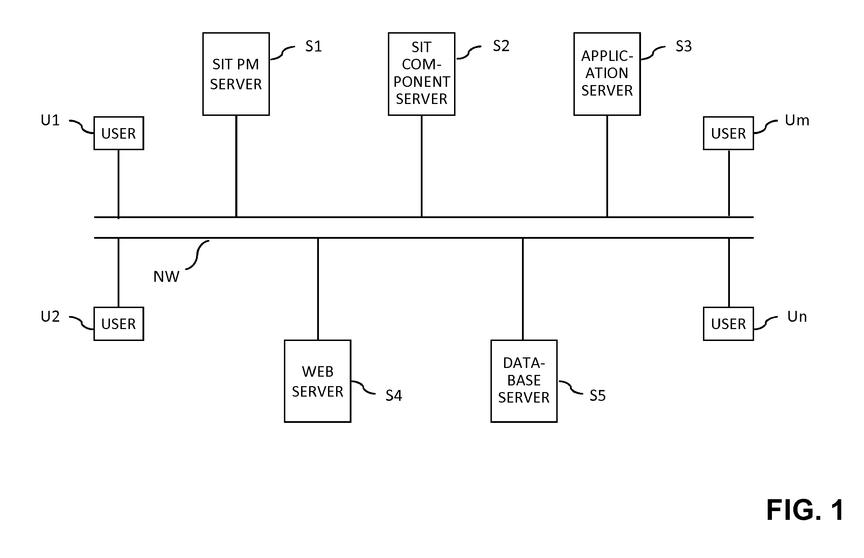

Figure 1 shows the hardware architecture of a MES system. By way of non limiting example, reference will be made to the architecture of the SIMATIC IT (in short, SIT) system of Siemens Corp.

SIMATIC IT is a collection of highly-integrated components, designed to integrate the systems within each factory, standardize production across the entire enterprise and keep manufacturing processes aligned with supply-chain activity. The core of this system is the SIMATIC IT Production Modeler (PM), which is an object-oriented graphical tool that enables the user to follow the entire lifecycle of a MES project. PM is a modeling environment where the functions, belonging to different SIMATIC IT components, are combined graphically in order to explicitly define the execution logic (explicit-rules approach). An overview of the product can be found in the document "SIMATIC IT PRODUCTION SUITE V. 6.6 - Functional Overview", April 2013, available on the website www.siemens.com.

In the example described, the architecture includes two servers S1 (SIT PM server) and S2 (SIT Component Server), specific for SIMATIC IT and hosting the Production Modeler and the components, respectively, as well as an application server S3, a web server S4, and a database server S5. The latter servers perform conventional functions known to the person skilled in the art. A network NW connects the elements shown.

Of course, different MES systems may require a different number of system-specific servers, depending on their organization.

Given the amount of work inherent in MES systems, different functionalities and components of the system may be installed on different machines and may be handled by different groups of people. The invention aims at providing a simple, quick and effective configuration method in such a scenario.

More particularly, the method of the invention is based on workflow technology. Workflow technology is commonly used in MES systems for handling the different tasks related to a certain activity. A workflow is a graphical representation of a job to be performed and includes a series of operations to be executed in a specific order, which can include decisions that depend on system inputs and on the system in which the workflow is operating.

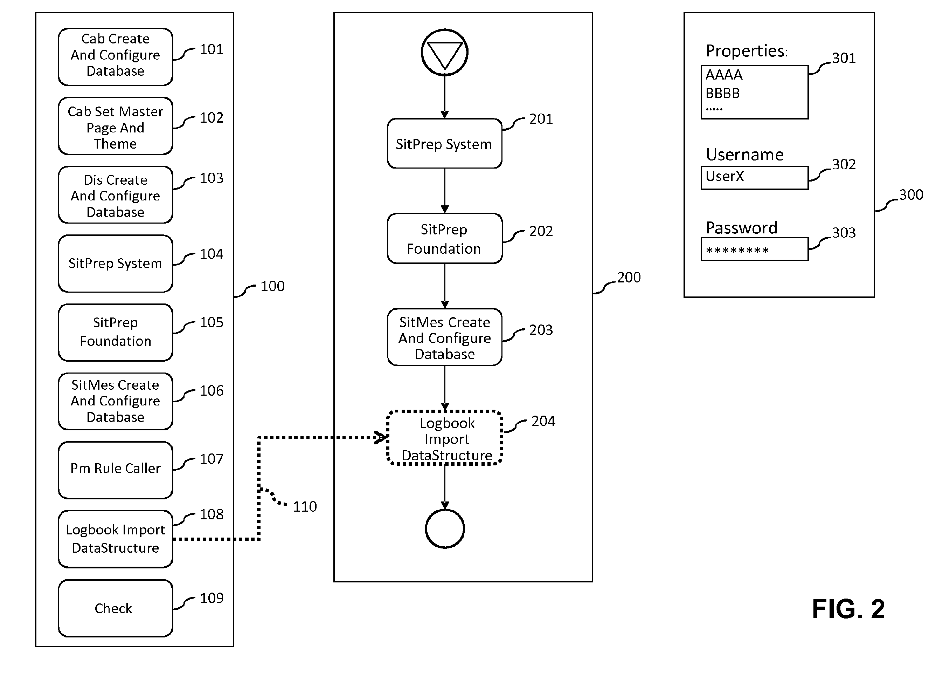

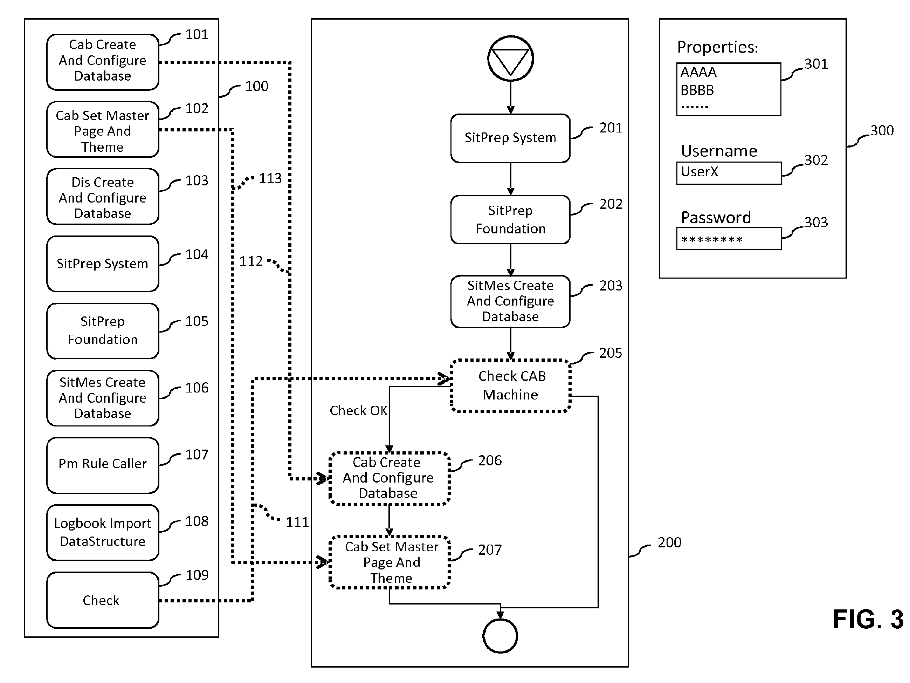

The user interfaces of machines U1...Un during configuration are schematically shown in Figures 2 and 3.

The left side of the Figures shows a "palette" or list 100 of configuration actions or activities. Nine actions 101 - 109 are shown, but clearly any number can be displayed. Each action contains standalone, well defined configuration tasks making it possible to configure the MES system and all components involved in a specific function without in-depth knowledge of each specific part.

The specific actions clearly depend on the system and the component to be configured. In SIMATIC IT system configurations, actions 101 to 108 are, for instance:
- "Cab Create And Configure Database", which creates and configures the CAB (Client Application Builder) database. CAB is a development platform through which it is possible to create custom interfaces and develop clients specifically designed to access data in the SIT database interacting with the system components and services;
- "Cab Set Master Page And Theme", which customizes the layout and theme of the global master page in the SIT Portal for all new users. The global master page is the default web page for a user who is not yet authenticated or to whom a personal profile has not being assigned. The SIT Portal is a web front-end portal for the entire MES project, including user preferences, and user and permission management;
- "Dis Create And Configure Database", which creates and configures the DIS (Data Integration Service) Project database. The DIS is a component which enables communication between SIMATIC IT and third-party systems, providing integration without the need to develop custom applications. The DIS Project is made up of XML (extensible Markup Language) project configuration files, which contain essential data such as user names, passwords, connector information, etc., required to manage the SIMATIC IT Data Integration Service;
- "SitPrep System" (SitPrep = SIT preparation), which configures the start-up of SIT services and sets User Names and Passwords;
- "SitPrep Foundation", which sets and configures the foundation server, including settings for the plant and network. The Foundation Server is the machine on which the SIMATIC IT Full Services software, along with SIMATIC IT licenses, has been installed. The Foundation Server is designated for storing information regarding network configuration, licenses and user management. It is also responsible for distributing this information to all other computers within the SIMATIC IT network;
- "SitMes Create And Configure Database", which creates and configures the SITMes (SIT Manufacturing Execution System) database;
- "Pm Rule Caller", which executes a rule on a PM Classic instance;
- "Logbook Import DataStructure", which imports data structures in the SIMATIC IT Logbook Service, i.e. it configures and generates BREAD assemblies without a shared folder. The Logbook service is a service which stores custom diagnostic and tracing messages from the Production Modeler in a central relational database. BREAD assemblies are Microsoft .NET assemblies used by Logbook Service and contain data structures.

The last action 109 is a check action that will be discussed further on, with reference to contextualization.

On the right of palette 100, configuration workflow 200 is shown, which, in the example, already includes a number of preparatory or default configurations steps 201 - 203, corresponding to the execution of actions 104 - 106. Of course, in other applications, the workflow could be created from scratch.

When a particular configuration action is required, the user selects it in palette 100 and inserts it into workflow 200, in the required position, through a simple drag-and-drop operation. In Figure 2 the drag-and-drop operation, schematized by dotted arrow 110, concerns action 108, which then becomes the last step 104 of the workflow. The same procedure is performed for all other configuration actions to be executed in that configuration phase. Once the workflow has been generated, it is passed in a standard way to a workflow execution engine, which interprets the individual commands and the conditions to be executed in order to configure the system.

Each configuration action needs a set of parameters, which are inserted through a property grid 301 included in graphical editor 300 shown on the right side of the Figures. The parameters are then validated during the engineering phase to ensure that they have been correctly configured, thus making the process virtually error proof. Editor 300 also makes it possible to insert other information required by the system, e.g. user name 302 and password 303.

Configuration actions are transactional actions: if an error occurs during the configuration process, the last task is rolled back in order to stabilize the system.

If the MES system includes different machines, as discussed above, the present invention introduces the concept of "contextualization" in the configuration workflow.

"Contextualization" means identifying the environment in which the workflow is running, through a series of methods and properties, which can be easily inserted into the workflow. These methods/properties make it possible, for instance, to check whether a component is installed on a machine to be configured in a given scenario, or whether, depending on scenario settings, the component is to be configured or not, etc. The specific methods/properties naturally depend on the specific system.

To enable contextualization, palette 100 includes the further action 109, which is a generic check action into which the user must introduce the condition to be checked. When contextualization is to be performed, the user inserts the check into workflow 200, through a drag-and-drop operation 111, and inputs the specific condition through property grid 301.

In Figure 3, the check is inserted as step 205 after the default steps 201 - 203. A positive result causes the execution of certain actions shown by steps 206, 207. In the example, step 205 checks the existence of the CAB machine and steps 206, 207 implement actions 101, 102 concerning CAB. These actions are inserted into workflow 100 through drag-and-drop operations 112, 113. Clearly, more than one check can be inserted into workflow 200.

In this manner it is possible to create a single, global workflow, which is executed on all machines and performs all the configuration steps required by a particular machine

In addition to the embodiments of the present invention described above, the persons skilled in the art will be able to arrive at a variety of other arrangements and steps which, even if not explicitly described in this document, nevertheless fall within the scope of the appended claims.

## Claims

1. A method of configuring a MES system, **characterized in that** it comprises the steps of:
- providing users (U1...Un) with a graphical user interface (100, 200, 300) providing a list (100) of configuration actions (101...108) regarding components and/or functionalities of the system as well as a configuration workflow (200);
- selecting one or more configuration actions (108) from the list (100) and inserting (110) the or each selected action into the workflow (200) in a required position (204); and
- executing the configuration workflow (200).

2. Method according to claim 1, wherein the workflow runs on multiple machines (S1-S5), each providing a respective environment and the configuration actions include a checking action to be performed to identify the environment in which the workflow (200) is running.

3. Method according to claim 2, further comprising the steps of:
- inserting (111) the checking action into the workflow (200), in one or more required positions (205);
- inserting conditions to be checked by the checking action; and
- performing determined configuration actions (206, 207) depending on the result of the check(s).

4. Method according to any preceding claim, further comprising the step of providing the users (U1...Un) with a graphical editor (300-303) for inserting parameters needed by a selected configuration action and/or conditions to be checked.

5. Method according to any preceding claim, wherein the insertion of the configuration and checking actions (101 - 109) into the workflow (200) is carried out through a drag-and-drop operation.

6. Equipment for configuring a MES system, **characterized in that** it comprises a graphical user interface (100, 200, 300) provided on user machines (U1...Un) and arranged to:
- provide users with a list (100) of configuration actions (101...108) concerning components and/or functionalities of the MES system, as well as a configuration workflow (200);
- allow the users to select one or more configuration actions (108) from the list (100) and to insert (110) the or each selected action into the workflow (200) in a required position.

7. Equipment according to claim 6, wherein the MES system includes multiple machines (S1-S5) on which the workflow (200) runs, each machine providing a respective environment, and wherein the graphical user interface (100, 200, 300) is arranged to:
- provide the users with a checking action (109) to identify the environment in which the workflow is running and to perform determined configuration actions (206, 207) depending on the result of the check;
- allow the user to insert the checking action (109) into the workflow (200) in one or more positions; and
- allow the user to insert conditions to be checked by the or each checking action.

8. Equipment according to claim 6 or 7, wherein the graphical user interface (100, 200, 300) includes a graphical editor (300-303) to insert parameters required by a selected configuration action and/or conditions to be checked by a checking action.

9. Equipment according to any of claims 6 to 8, wherein the graphical user interface is arranged to allow the user to insert the configuration and checking actions (101 - 109) into the workflow (200) through a drag-and-drop operation.

10. A computer program product for performing steps of the method according to any of claims 1 to 5.
